# EUROPEAN PATENT APPLICATION

(11) **EP 4 019 213 A1**
(43) Date of publication of application: **29.06.2022**
(21) Application number: 20854015.3
(22) Date of filing: 06.03.2020
(51) Int. Cl.: B25J 19/06

(54) **CONTROL DEVICE FOR ROBOT, CONTROL METHOD FOR ROBOT, AND PROGRAM**

(30) Priority: 21.08.2019 JP 2019151184
(71) Applicant: OMRON Corporation, Shiokoji-dori, Shimogyo-Ku Kyoto-shi Kyoto 600-8530 (JP)
(72) Inventor: MISHIMA, Kazuma, Kyoto-shi, Kyoto 600-8530 (JP)
(74) Representative: Isarpatent
(86) International application number: PCT/JP2020/009735
(87) International publication number: WO 2021/033355

(57) **Abstract**

A control device for a robot that works in cooperation with a worker includes a radar transmission-reception section that transmits a radar wave to a co-working area in which the worker and the robot work together in cooperation and receives a reflected wave resulting from the radar wave being reflected off an object in the co-working area, a radar data processor that calculates, based on the reflected wave received by the radar transmission-reception section, a reflected power level of the object in the co-working area, and a controller that performs interference reduction to reduce interference between the robot and the worker in response to a presence of an object having a reflected power level calculated by the radar data processor higher than or equal to a predetermined threshold in the co-working area. The technique reduces accidental interference between a robot and a worker working in cooperation with each other.

## Description

### TECHNICAL FIELD

The present invention relates to a technique for controlling a robot.

### BACKGROUND

Industrial robots are increasingly used at factories and other manufacturing sites. The use of the robots may cause workers to work in cooperation with the robots in processes such as parts assembling. In such processes, the co-working area in which the robots and the workers work together may be monitored to reduce interference between the robots and the workers. A known technique thus monitors, for example, the positions of the robots and the workers in the co-working area and slows down or stops the operation of the robot when a robot comes within a predetermined distance from, for example, a worker (refer to, for example, Patent Literature 1).

### CITATION LIST

### PATENT LITERATURE

Patent Literature 1: Japanese Unexamined Patent Application Publication No. 2010-208002

### SUMMARY

### TECHNICAL PROBLEM

The positions of the robots and the workers in the co-working area may be detected by a radar sensor that three-dimensionally senses the co-working area. The radar sensor detects, for example, an object or the position of an object by emitting millimeter radio waves (radar waves) and receiving radio waves (reflected waves) reflected off the object located within a range of the emission.

Radar waves reflected off an object has a different level of reflected power depending on, for example, the material or the shape of the object. For example, a work tool such as a workbench installed in the co-working area for the robots and workers is formed from a material with a high level of reflected power (e.g., metal). The work tool may have a higher level of reflected power than the worker (human body). Thus, the weak reflected waves from an arm or another part of the worker near the work tool may be less noticeable in the strong reflected waves from the work tool. This phenomenon easily occurs when a radar sensor is installed at an inappropriate position. In such a case, the position of the arm or another part of the worker near the work tool may not be detected appropriately, and thus the robot and the worker may not avoid interference appropriately.

In response to the above issue, one or more aspects of the present invention are directed to a technique for reducing accidental interference between a robot and a worker working in cooperation with each other.

### SOLUTION TO PROBLEM

A control device for a robot according to one or more aspects of the present invention monitors a co-working area in which a robot and a worker work together using a radar wave and controls the robot based on the monitoring result. Upon detecting an object having reflected power strong enough to cause difficulty in appropriately detecting the position of the worker (or a body part of the worker) in the co-working area, the control device performs a process for reducing accidental interference (interference reduction) between the robot and the worker.

More specifically, the control device according to one or more aspects of the present invention is a control device for a robot that works in cooperation with a worker. The control device includes a radar transmission-reception section that transmits a radar wave to a co-working area in which the worker and the robot work in cooperation with each other and receives a reflected wave resulting from the radar wave being reflected off an object in the co-working area, a radar data processor that calculates, based on the reflected wave received by the radar transmission-reception section, a reflected power level of the object in the co-working area, and a controller that performs interference reduction to reduce interference between the robot and the worker in response to a presence of an object having a reflected power level calculated by the radar data processor higher than or equal to a predetermined threshold in the co-working area. For example, an object having a reflected power level higher than or equal to the predetermined threshold is estimated to cause difficulty in detecting the position of an arm or another part of the worker near the object based on the reflected wave received by the radar transmission-reception section. The value of the threshold is predetermined through a fitting process based on, for example, experiment and simulation results.

Any object having a reflected power level higher than or equal to the predetermined threshold (hereafter also referred to as a strong reflector) in the co-working area reflects a radar wave emitted from the radar transmission-reception section toward the co-working area. A reflected wave from an arm or another part of the worker near the strong reflector may be less noticeable in the reflected wave from the strong reflector. This may cause difficulty in separating the reflected wave from the arm or another part of the worker and the reflected wave from the strong reflector. In this case, the position of the arm or another part of the worker in the co-working area may be undetectable. The control device according to one or more aspects of the present invention performs interference reduction in response to detection of any strong reflector in the co-working area. This reduces accidental interference between the robot and the worker resulting from difficulty in appropriately detecting the position of an arm or another part of the worker near the strong reflector.

In the control device for a robot according to one or more aspects of the present invention, the interference reduction may include stopping an operation of the robot. This reduces interference between the robot and the worker resulting from difficulty in appropriately detecting the position of an arm or another part of the worker near the strong reflector.

The interference reduction may also include alerting the worker. Alerting the worker includes, for example, generating an alarm sound, turning on an alarm lamp, displaying a warning message, and outputting a voice warning message. This allows the worker to leave and stay away from the co-working area or take action to avoid interference with the robot when the position of an arm or another part of the worker near the strong reflector is not appropriately detectable. This reduces accidental interference between the robot and the worker.

The co-working area may include a work tool usable by the robot and the worker in work. Such a work tool may be formed from a material (e.g., metal) or may have a shape (e.g., a shape with a large proportion of its outer wall surface being flat) that can easily have strong reflected power. Thus, a radar transmission-reception section installed perpendicularly to the work tool (for example, installed to emit part of the radar waves to hit the work tool perpendicularly or installed to cause the incidence angle to be a right angle) can increase the reflected power level of the work tool to a level higher than or equal to the predetermined threshold. In contrast, the radar transmission-reception section installed obliquely to the work tool (for example, installed to emit part of the radar waves to hit the work tool at an angle other than a right angle or installed to cause the incidence angle to be an angle other than a right angle) can reduce the radar cross-section (RCS) of the work tool and thus reduce the reflected power level of the work tool to less than the predetermined threshold. This allows detection of the position of an arm or another part of the worker near the work tool in an environment in which the work tool is installed in the co-working area. However, the radar transmission-reception section may not be installed appropriately in a factory or other sites (for example, at an inappropriate angle or distance to the work tool).

The co-working area may include a work tool usable by the robot and the worker in cooperative work. In the control device for a robot according to one or more aspects of the present invention, the predetermined threshold may be set to a value greater than a reflected power level of the work tool detected with the radar transmission-reception section being installed in a predetermined state. The radar transmission-reception section installed inappropriately may increase the reflected power level of the work tool to a level higher than or equal to the predetermined threshold. In such a case, the structure can reduce accidental interference between the robot and the worker. The controller may perform the interference reduction and prompt the worker to adjust installation of the radar transmission-reception section (hereafter also referred to as an adjustment request) in response to detection of a strong reflector being the work tool in the co-working area. The adjustment request includes, for example, causing a display or other devices to display character information or other information prompting the worker to adjust the installation of the radar transmission-reception section or causing a speaker or other devices to output a voice message or another message prompting the worker to adjust the installation of the radar transmission-reception section. This allows the worker to adjust the installation of the radar transmission-reception section, thus reducing inefficiency in the subsequent work.

The work tool is, for example, a workbench, a box or shelf for storing tools, a box or shelf for storing parts, an operation panel for operating various devices, or a wall or fence partitioning the co-working area.

The above aspects of the present invention may be implemented as a control method for a robot that works in cooperation with a worker. For example, the above aspects of the present invention may be implemented as a control method for a robot that includes transmitting a radar wave to a co-working area in which the worker and the robot work in cooperation with each other and receiving a reflected wave resulting from the radar wave being reflected off an object in the co-working area, calculating, based on the received reflected wave, a reflected power level of the object in the co-working area, and performing interference reduction to reduce interference between the robot and the worker in response to a presence of an object having a calculated reflected power level higher than or equal to a predetermined threshold in the co-working area. The above aspects of the present invention may also be implemented as a program for implementing the above method or as a recording medium that records the program in a non-transitory manner. The present invention may be implemented by combining the above structures and processes in any possible manner.

### ADVANTAGEOUS EFFECTS

The technique according to the above aspects of the present invention reduces accidental interference between the robot and the worker working in cooperation with each other.

### BRIEF DESCRIPTION OF THE DRAWINGS

FIG. 1 is a diagram of a control device according to one or more embodiments of the present invention used in an example situation.
FIG. 2 is a block diagram of the control device according to an embodiment.
FIG. 3 is a diagram of a radar transmission-reception section in an example.
FIGs. 4A and 4B each are a graph showing the intensity of the reflected wave from a workbench and the intensity of the reflected wave from an arm of a worker near the top surface of the workbench, detected when the radar transmission-reception section transmits radar waves.
FIG. 5 is a functional block diagram of a controller in an example.
FIG. 6 is a flowchart of a process performed by the control device according to the embodiment.

### DETAILED DESCRIPTION

### <Example Use>

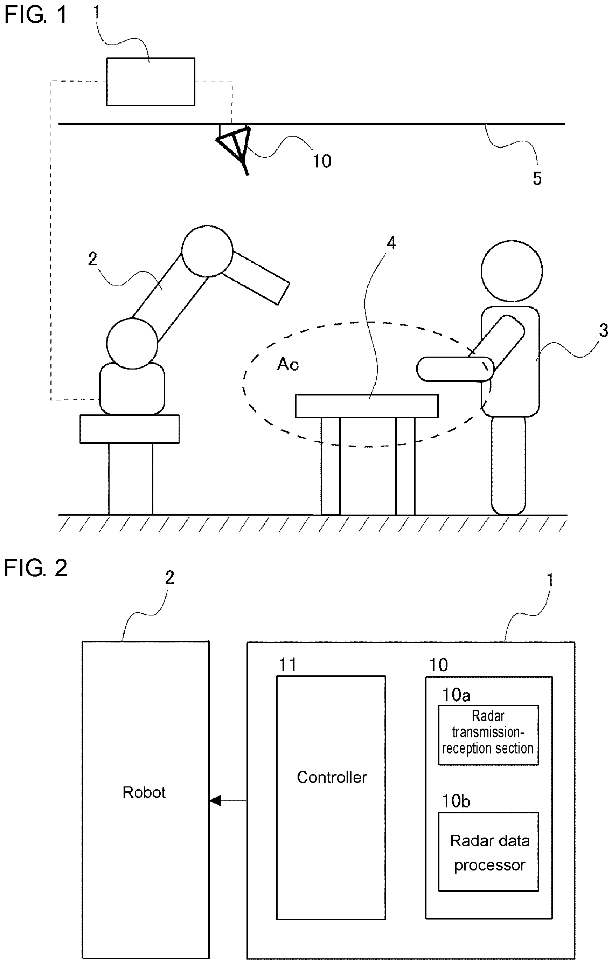

A control device for a robot according to one or more embodiments of the present invention used in one example situation will now be described with reference to FIG. 1. A control device 1 controls a robot 2 in accordance with data (e.g., the position of an object in a co-working area Ac and the reflected power level of an object) obtained from a radar sensor 10 installed above (for example, on a ceiling 5) the area in which the robot 2 and a worker 3 work together (co-working area Ac). The control device 1 controls, for example, the operation speed of the robot 2 in a factory or other sites where the robot 2 and the worker 3 work together in processes such as parts assembling. For example, the control device 1 slows down or stops the operation of the robot 2 when the robot 2 and the worker 3 are at relatively a small distance in the co-working area Ac.

As shown in FIG. 1, a workbench 4 may be installed in the co-working area Ac. The workbench 4 is formed from a material (e.g., metal) having a higher relative dielectric constant than the body of the worker 3 and typically shaped to have a large radar cross-section for radar waves (for example, with a flat top surface extending horizontally). In such an environment, the radar sensor 10 installed inappropriately may have difficulty in separating the reflected wave from the body of the worker 3 and the reflected wave from the workbench 4. For example, the radar sensor 10 may be installed to emit part of the radar waves to hit perpendicularly the top surface of the workbench 4 (installed to cause the incidence angle to be a right angle). This may increase the radar cross-section of the workbench 4 and thus cause an excessively higher reflected power level for the workbench 4 than for the body of the worker 3. Thus, the reflected wave from an arm or another part of the worker 3 near the workbench 4 may be less noticeable in the strong reflected wave from the workbench 4, possibly causing difficulty in appropriately detecting an arm or another part of the worker 3. The radar sensor 10 is thus to be installed obliquely to the top surface of the workbench 4 to avoid the radar waves emitted from the radar sensor 10 hitting the top surface of the workbench 4 perpendicularly (to avoid the incidence angle being perpendicular to the top surface). However, the radar sensor 10 may not be installed appropriately in a factory or other sites, possibly causing difficulty in appropriately detecting the position of the arm or another part of the worker 3 near the workbench 4.

In contrast, the control device 1 in this example performs a process for reducing interference (interference reduction) between the robot 2 and the worker 3 upon detecting, based on data obtained from the radar sensor 10, an object having a reflected power level higher than or equal to a predetermined threshold in the co-working area Ac. When, for example, the radar sensor 10 is not appropriately installed, the position of a body part (e.g., an arm) of the worker 3 in the co-working area Ac may not be detected appropriately. In such a situation, the control device 1 reduces accidental interference between the robot 2 and the worker 3. With the radar sensor 10 installed appropriately, an object unexpected or unused in a work process may be placed in the co-working area Ac, or a work tool may be installed at a different location or oriented in a different direction. This may cause detection of an object having a reflected power level higher than or equal to the predetermined threshold. In this case as well, the control device 1 reduces accidental interference between the robot 2 and the worker 3.

### <Embodiments>

One or more embodiments of the present invention will now be described with reference to the drawings. In the present embodiment, as described above with reference to FIG. 1, the control device according to one or more embodiments of the present invention is used for a robot that works in cooperation with a worker in a factory or other sites.

### (Schematic Structure of Control Device)

FIG. 2 is a block diagram of the control device 1 in the present embodiment. The control device 1 includes the radar sensor 10 and a controller 11. The radar sensor 10 detects, for example, the position of an object in a target area and the reflected power level of the object using millimeter radio waves (radar waves). In this example, as shown in FIG. 1, the radar sensor 10 detects, for example, the position of an object and the reflected power level of the object in a target area, which is the co-working area Ac in which the robot 2 and the worker 3 work together. The controller 11 determines, based on the reflected power level of the object detected by the radar sensor 10, whether the position of an arm or another part of the worker 3 in the co-working area Ac is appropriately detectable. Upon determining that the position of an arm or another part of the worker 3 in the co-working area Ac is not appropriately detectable, the controller 11 performs a process for reducing accidental interference (interference reduction) between the robot 2 and the worker 3.

### <Structure of Radar Sensor>

The radar sensor 10 is, for example, a frequency modulated continuous wave (FMCW) radar sensor. The radar sensor 10 may be other than an FMCW radar sensor (e.g., a pulse-Doppler radar sensor). As shown in FIG. 2, the radar sensor 10 in this example includes a radar transmission-reception section 10a and a radar data processor 10b.

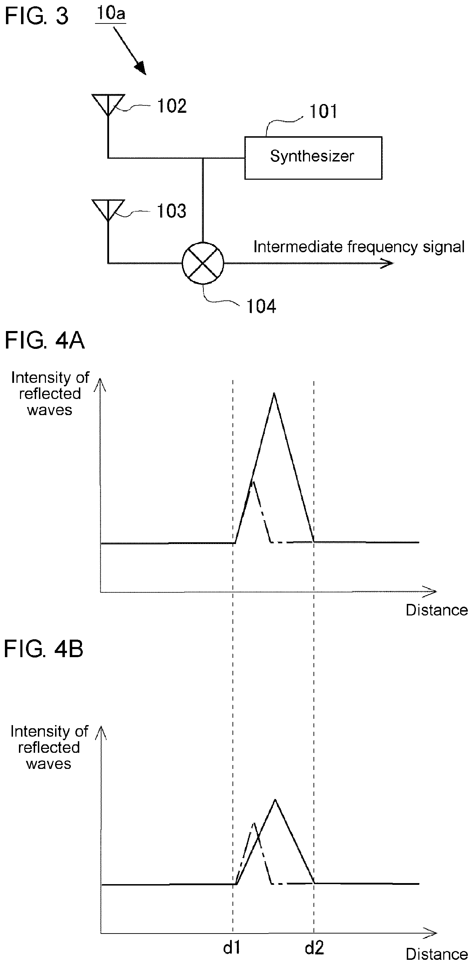

As shown in FIG. 3, the radar transmission-reception section 10a includes, for example, a synthesizer 101, a transmitting antenna 102, a receiving antenna 103, and a mixer 104. The synthesizer 101 generates a chirp. A chirp is a signal with the frequency that increases or decreases with time. The transmitting antenna 102 transmits radar waves at a frequency corresponding to the chirp toward the co-working area Ac. The receiving antenna 103 receives reflected waves resulting from the radar waves transmitted from the transmitting antenna 102 being reflected off an object in the co-working area Ac. The receiving antenna 103 may include multiple antennas. For example, the receiving antenna 103 may include antennas horizontally staggered and antennas vertically staggered. In this case, the receiving antenna 103 can detect the position of the object in the co-working area Ac three-dimensionally. The mixer 104 generates an intermediate frequency signal by combining the chirp generated by the synthesizer 101 and the signal of the reflected wave received by the receiving antenna 103. The intermediate frequency signal is output to the radar data processor 10b (described later) together with, for example, the signal of the reflected wave received by the receiving antenna 103. The radar transmission-reception section 10a may include a filter to remove unintended signal components from the intermediate frequency signal and an analog-digital converter.

As described above with reference to FIG. 1, the radar transmission-reception section 10a is to be installed obliquely to the top surface of the workbench 4 in an environment in which the workbench 4 is installed in the co-working area Ac. The radar transmission-reception section 10a is to be installed obliquely to the top surface of the workbench 4 for the reasons described below with reference to FIGs. 4A and 4B. FIGs. 4A and 4B each are a graph showing the intensity of the reflected wave from the workbench 4 and the intensity of the reflected wave from an arm of the worker 3 near the top surface of the workbench 4, detected when the radar transmission-reception section 10a transmits radar waves. In FIGs. 4A and 4B, each horizontal axis indicates the distance from one end of co-working area Ac, and each vertical axis indicates the intensity of the reflected waves. FIG. 4A shows the intensities with the radar transmission-reception section 10a installed perpendicularly to the top surface of the workbench 4. FIG. 4B shows the intensities with the radar transmission-reception section 10a installed obliquely to the top surface of the workbench 4. The range d1 to d2 in FIGs. 4A and 4B is a range in the co-working area Ac in which the workbench 4 is installed.

As shown in FIGs. 4A and 4B, the intensity of the reflected wave from the workbench 4 (the solid lines in FIGs. 4A and 4B) is lower for the radar transmission-reception section 10a installed obliquely to the top surface of the workbench 4 (FIG. 4B) than for the radar transmission-reception section 10a installed perpendicularly to the top surface of the workbench 4 (FIG. 4A). The radar transmission-reception section 10a installed obliquely to the top surface of the workbench 4 has a smaller radar cross-section on the top surface of the workbench 4 than the radar transmission-reception section 10a installed perpendicularly to the top surface of the workbench 4, and thus has a lower radar wave reflectivity on the top surface of the workbench 4. Thus, the difference between the intensity of the reflected wave from the workbench 4 and the intensity of the reflected wave from an arm of the worker 3 (dot-and-dash lines in FIGs. 4A and 4B) is smaller for the radar transmission-reception section 10a installed obliquely to the top surface of the workbench 4 than for the radar transmission-reception section 10a installed perpendicularly to the top surface of the workbench 4. This allows easier separation of the reflected wave from the workbench 4 and the reflected wave from an arm or another body part of the worker 3 for the radar transmission-reception section 10a installed obliquely to the top surface of the workbench 4 than for the radar transmission-reception section 10a installed perpendicularly to the top surface of workbench 4. The radar transmission-reception section 10a installed obliquely to the top surface of the workbench 4 thus allows appropriate detection of the position of the arm or another body part of the worker 3 near the top surface of the workbench 4 in an environment in which the workbench 4 is installed in the co-working area Ac. The appropriate angle at which the radar transmission-reception section 10a is installed obliquely to the top surface of the workbench 4 varies depending on, for example, the material or the shape of the workbench 4, the separation resolution of the radar sensor 10, and the distance between the radar transmission-reception section 10a and the workbench 4. The angle may thus be determined based on such factors. In an environment in which the multiple work tools are installed in the co-working area Ac, the radar transmission-reception section 10a is installed to allow separation of the reflected waves from all the work tools and the reflected wave from the body of the worker 3.

The radar transmission-reception section 10a may be installed lateral to the workbench 4 rather than above the workbench 4. In other words, the radar transmission-reception section 10a may be appropriately installed at any location to allow separation of the reflected wave from any work tool and the reflected wave from the body of the worker 3 near the work tool.

Referring back to FIG. 3, the radar data processor 10b detects an object located in the co-working area Ac based on, for example, an intermediate frequency signal and the signal of the reflected wave output from the radar transmission-reception section 10a. For example, the radar data processor 10b calculates, for example, the position of an object in the co-working area Ac and the reflected power level of the object by analyzing the intermediate frequency signal and the reflected wave signal from the radar transmission-reception section 10a. The calculation may be performed with a known technique. The reflected power level in this example refers to the intensity of the reflected wave from an object toward the receiving antenna 103 (the radio field intensity of the reflected wave received by the receiving antenna 103). The reflected power level is a parameter that correlates with the size of the radar cross-section. Other parameters that correlate with the reflected power level may include, for example, the power level of the reflected wave received by the receiving antenna 103 and the reflectivity (the ratio of the power level of the reflected wave received by the receiving antenna 103 to the power level of the radar wave transmitted from the transmitting antenna 102).

### (Structure of Controller)

The controller 11 will now be described. The controller 11 is, for example, a computer including a processor and a memory. The processor is, for example, a central processing unit (CPU) or a digital signal processor (DSP). The memory is a computer-readable recording medium, such as a random access memory (RAM), a read-only memory (ROM), an erasable programmable ROM (EPROM), a hard disk drive (HDD), or a removable medium. The memory stores various programs and other information items. The programs stored in the memory are executed by the processor to implement various functional components. This enables the controller 11 to perform functions achieving predetermined purposes. The controller 11 may include multiple computers.

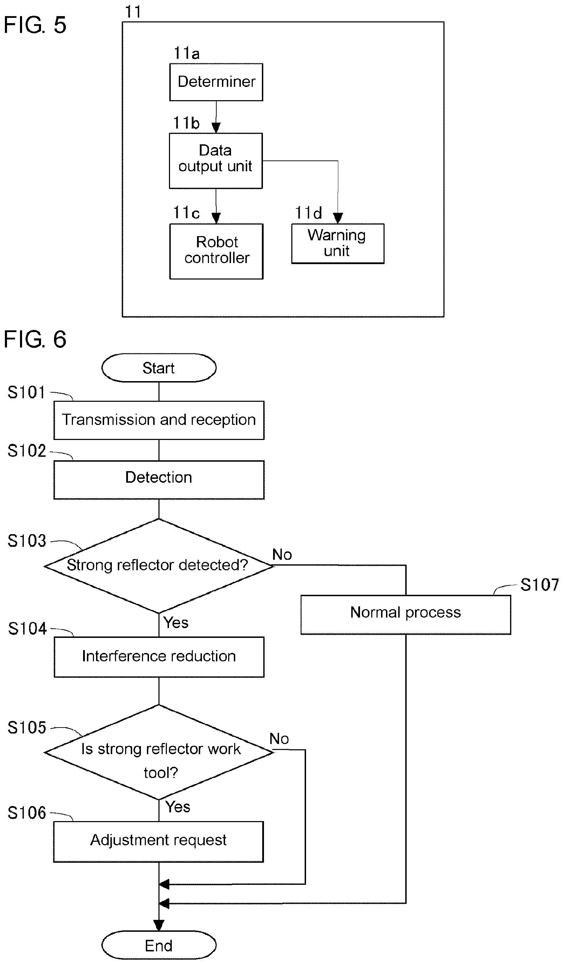

FIG. 5 shows example functional components in the controller 11. The controller 11 in this example includes, as its functional components, a determiner 11a, a data output unit 11b, a robot controller 11c, and a warning unit 11d. These functional components are implemented by, for example, the processor executing various programs stored in the memory.

The determiner 11a determines, based on the reflected power level calculated by the radar data processor 10b, whether the position of an arm or another part of the worker 3 in the co-working area Ac is appropriately detectable. For example, the determiner 11a first determines whether an object having a reflected power level higher than or equal to a predetermined threshold (strong reflector) is located in the co-working area Ac. For example, a work tool such as the workbench 4 having a reflected power level higher than or equal to the predetermined threshold is estimated to cause difficulty with the radar sensor 10 detecting the position of an arm or another part of the worker 3 near the work tool. In other words, a work tool such as the workbench 4 having a reflected power level higher than or equal to the predetermined threshold is estimated to cause difficulty with the radar sensor 10 separating the reflected wave from the work tool and the reflected wave from an arm or another part of the worker 3 near the work tool. The optimum value for the predetermined threshold varies depending on, for example, the material and the shape of the work tool such as the workbench 4, the separation resolution of the radar sensor 10, and the distance between the radar transmission-reception section 10a and the work tool. The separation resolution of the radar sensor 10 can be predetermined. Thus, the reflected power level of a work tool such as the workbench 4 and the reflected power level of an arm or another part of the worker 3 may be measured before the radar sensor 10 is installed in a factory to determine the predetermined threshold based on the measurements. In response to the presence of any object having a reflected power level higher than or equal to the predetermined threshold determined in this manner in the co-working area Ac, the determiner 11a determines that the position of the arm or another part of the worker 3 in the co-working area Ac is not appropriately detectable.

In an environment in which the workbench 4 is installed in the co-working area Ac as shown in FIG. 1, the predetermined threshold may be set to a value greater than the reflected power level of the workbench 4 detected with the radar sensor 10 being installed appropriately (e.g., installed obliquely to the top surface of the workbench 4). With the predetermined threshold set as above, the determiner 11a may determine that the radar sensor 10 is installed inappropriately in response to the reflected power level of the workbench 4 being higher than or equal to the predetermined threshold.

The data output unit 11b outputs a command to the robot controller 11c and the warning unit 11d in accordance with the determination result from the determiner 11a. For example, in response to the determiner 11a determining that the position of an arm or another part of the worker 3 in the co-working area Ac is appropriately detectable (or determining that the radar sensor 10 is appropriately installed), the data output unit 11b outputs a command for causing the robot 2 to operate normally to the robot controller 11c (described later).

Although the determiner 11a determines that the position of an arm or another part of the worker 3 in the co-working area Ac is appropriately detectable, the data output unit 11b may output a command to the robot controller 11c to cause the robot 2 to operate slower than normal in response to the position of the robot 2 being relatively close to the position of an arm or another part of the worker 3 as detected by the radar sensor 10 (e.g., the distance between the positions being less than or equal to a predetermined distance). The predetermined distance is an estimated distance at which the robot 2 and the worker 3 can interfere with each other when the robot 2 performs the subsequent operation or the worker 3 moves from the current position, or is a distance obtained by adding a predetermined margin to the estimated distance. The value of the distance is predetermined through a fitting process based on experiment or simulation results.

In response to the determiner 11a determining that the position of an arm or another part of the worker 3 in the co-working area Ac is not appropriately detectable (or determining that the radar sensor 10 is not appropriately installed), the data output unit 11b outputs a command for performing interference reduction to the robot controller 11c or the warning unit 11d. The interference reduction includes, for example, stopping the operation of the robot 2 and providing a warning to alert the worker 3. In this example, all or one of these processes may be performed as the interference reduction. Thus, in response to determination that the position of an arm or another part of the worker 3 in the co-working area Ac is not appropriately detectable, the data output unit 11b at least outputs the command for stopping the operation of the robot 2 to the robot controller 11c or outputs the command for providing a warning to alert the worker 3 to the warning unit 11d. In response to the determiner 11a determining that the radar sensor 10 is not installed appropriately, the data output unit 11b may output, in addition to the above command(s), a command for alerting the worker 3 to adjust installation of the radar sensor 10 to the warning unit 11d.

The robot controller 11c controls the robot 2 in accordance with a command output from the data output unit 11b. For example, in response to a command from the data output unit 11b for causing the robot 2 to operate slower than normal, the robot controller 11c controls the robot 2 to operate slower than normal. In response to a command from the data output unit 11b for stopping the operation of the robot 2, the robot controller 11c controls the robot 2 to stop.

The warning unit 11d outputs a warning in accordance with a command output from the data output unit 11b. For example, the warning unit 11d includes an alarm lamp or a speaker and turns on the alarm lamp or causes the speaker to output an alarm sound or a warning message in accordance with the command from the data output unit 11b. This alerts the worker 3 to interference with the robot 2 in response to the determiner 11a determining that the position of an arm or another part of the worker 3 in the co-working area Ac is not appropriately detectable. The warning unit 11d may provide a warning to alert the worker 3 to adjust the installation of the radar sensor 10 by causing the speaker to output a voice message or causing a display or another device to display character information to prompt adjustment of the installation of the radar sensor 10. The worker 3 may thus adjust the installation of the radar sensor 10.

### (Operation of Control Device)

An operation of the control device 1 in the present embodiment will now be described with reference to FIG. 6. FIG. 6 is a flowchart showing a process repeatedly performed by the control device 1 while the robot 2 and the worker 3 are working in cooperation with each other.

In the process shown in FIG. 6, the control device 1 first performs transmission and reception (step S101). For example, the synthesizer 101 in the radar transmission-reception section 10a generates a chirp. The transmitting antenna 102 transmits a radar wave at a frequency corresponding to the generated chirp toward the co-working area Ac. The radar wave transmitted from the transmitting antenna 102 is reflected off an object in the co-working area Ac to be a reflected wave, which is then received by the receiving antenna 103. The mixer 104 combines the radar wave transmitted from the transmitting antenna 102 and the reflected wave received by the receiving antenna 103 to generate an intermediate frequency signal. The intermediate frequency signal generated by the mixer 104 is provided to the radar data processor 10b together with, for example, the signal of the reflected wave received by the receiving antenna 103.

The radar data processor 10b detects, based on the signal received from the radar transmission-reception section 10a, an object in the co-working area Ac (step S102). For example, the radar data processor 10b detects information about the object in the co-working area Ac by performing frequency analysis, for example, a fast Fourier transform (FFT) on the intermediate frequency signal, the signal of the reflected waves, and other signals. More specifically, the radar data processor 10b detects an object in the co-working area Ac and calculates the position (the distance and the azimuth) of the detected object based on the frequency distribution of the signal of the reflected wave and the intermediate frequency signal. The radar data processor 10b calculates the reflected power level of the reflected wave based on the signal received from the radar transmission-reception section 10a. The received power level or the reflectivity may be calculated as a parameter correlating with the reflected power level. These parameters may be calculated with a known technique. The information about the position and the reflected power level of the detected object is provided to the determiner 11a in the controller 11.

The determiner 11a determines, based on the information received from the radar data processor 10b, whether an object having a reflected power level higher than or equal to a predetermined threshold (strong reflector) is detected in the co-working area Ac (step S103). As described above, an object having a reflected power level higher than or equal to the predetermined threshold in the co-working area Ac is estimated to cause difficulty in appropriately detecting an arm or another part of the worker 3 near the object.

In response to no detection of a strong reflector in the co-working area Ac (negative determination result in step S103), the control device 1 controls the robot 2 normally (normal process) (step S107). For example, the data output unit 11b calculates the distance between the robot 2 and the worker 3 based on the position information about the detected object and determines whether the calculated distance is smaller than or equal to the predetermined distance. In response to the distance between the robot 2 and the worker 3 being larger than the predetermined distance, the data output unit 11b outputs a command for operating the robot 2 at a normal operating speed to the robot controller 11c. The robot controller 11c then controls the robot 2 to operate at the normal operating speed. In response to the distance between the robot 2 and the worker 3 being smaller than or equal to the predetermined distance, the data output unit 11b outputs a command for operating the robot 2 at a speed lower than the normal operating speed to the robot controller 11c. The robot controller 11c then controls the robot 2 to operate at the speed lower than the normal operating speed. As described above, the predetermined distance is an estimated distance at which the robot 2 and the worker 3 can interfere with each other when the robot 2 performs the subsequent operation or the worker 3 moves from the current position, or a distance obtained by adding a predetermined margin to the estimated distance. The normal process performed in the above manner allows the robot 2 and the worker 3 to continue working in cooperation with each other while reducing interference between the robot 2 and the worker 3.

In contrast, in response to detection of a strong reflector in the co-working area Ac (affirmative determination result in step S103), the radar sensor 10 can have difficulty in appropriately detecting an arm or another part of the worker 3 near the strong reflector. The control device 1 thus performs interference reduction (step S107). For example, the data output unit 11b at least outputs a command for stopping the operation of the robot 2 to the robot controller 11c or outputs a command for providing a warning to alert the worker 3 to the warning unit 11d. In response to the command for stopping the operation of the robot 2 output from the data output unit 11b to the robot controller 11c, the robot controller 11c controls the robot 2 to stop the operation of the robot 2. In response to the command for providing a warning to alert the worker 3 output from the data output unit 11b to the warning unit 11d, the warning unit 11d turns on an alarm lamp or outputs an alarm sound or a voice warning message from a speaker. The interference reduction performed in the above manner reduces accidental interference between the robot 2 and the worker 3 resulting from difficulty with the radar sensor 10 appropriately detecting an arm or another part of the worker 3 near the strong reflector.

After performing the interference reduction, the control device 1 determines whether the strong reflector detected in the co-working area Ac is a work tool such as the workbench 4 (step S105). For example, the determiner 11a determines whether the strong reflector is a work tool by comparing the position of the detected strong reflector with the position of the work tool. In response to determination that the strong reflector is not a work tool (negative determination result in step S105), the control device 1 then exits from the process. In response to determination that the strong reflector is a work tool (affirmative determination result in step S105), the control device 1 requests adjustment (step S106). For example, the data output unit 11b outputs, to the warning unit 11d, a command for providing a warning to prompt the worker 3 to adjust the installation of the radar transmission-reception section 10a. In this case, the warning unit 11d causes a display or another device to display, for example, character information prompting adjustment of the installation of the radar transmission-reception section 10a or causes a speaker or another device to output a voice message prompting adjustment of the installation of the radar transmission-reception section 10a. This allows the worker to adjust the installation of the radar transmission-reception section 10a appropriately, thus reducing inefficiency in the subsequent work.

A strong reflector left unused in a work process placed in the co-working area Ac or an object used in a work process (e.g., parts, tools, parts storage boxes, and tool storage boxes) placed in the co-working area Ac with a large radar cross-section can cause difficulty in appropriately detecting the position of an arm or another part of the worker near the object. The radar sensor 10 (radar transmission-reception section 10a) installed inappropriately may have difficulty in appropriately detecting the position of an arm or another part of the worker 3 in the co-working area Ac. In such cases, the control device 1 according to the present embodiment performs interference reduction to reduce interference between the robot 2 and the worker 3.

The control device 1 can also prompt the worker 3 to adjust the installation of the radar transmission-reception section 10a when the radar sensor 10 (radar transmission-reception section 10a) installed inappropriately has difficulty in appropriately detecting the position of an arm or another part of the worker 3 in the co-working area Ac. This reduces inefficiency in the subsequent work.

### <Others>

The above embodiment describes exemplary structures according to one or more aspects of the present invention. The present invention is not limited to the specific embodiment described above, but may be modified variously within the scope of the technical ideas of the invention.

For example, the technique according to one or more aspects of the present invention is used for a robot that works in cooperation with a worker in a manufacturing site such as a factory in the above embodiment, but the technique may be used for a robot that works in cooperation with a worker in other sites. For example, the technique according to one or more aspects of the present invention may be used for a robot that works in cooperation with a worker in a medical field or a research and development field.

The processes or the structures described in the above embodiment may be combined in any manner unless such combinations cause technical conflicts between them. A process performed by a single device may be performed by multiple devices in a shared manner. Processes performed by different devices may be performed by a single device. In other words, each function of the control device may be implemented by any hardware configuration that can flexibly be changed.

### <Appendix 1>

(1) A control device (1) for a robot (2) working in cooperation with a worker (3), the device (1) comprising:
   a radar transmission-reception section (10a) configured to transmit a radar wave to a co-working area (Ac) in which the worker (3) and the robot (2) work in cooperation with each other and to receive a reflected wave resulting from the radar wave being reflected off an object in the co-working area (Ac);
   a radar data processor (10b) configured to calculate, based on the reflected wave received by the radar transmission-reception section (10a), a reflected power level of the object in the co-working area (Ac); and
   a controller (11) configured to perform interference reduction to reduce interference between the robot (2) and the worker (3) in response to a presence of an object having a reflected power level calculated by the radar data processor (10b) higher than or equal to a predetermined threshold in the co-working area (Ac).
(2) A control method for a robot (2) working in cooperation with a worker (3), the method comprising:
   (S101) transmitting a radar wave to a co-working area (Ac) in which the worker (3) and the robot (2) work in cooperation with each other and receiving a reflected wave resulting from the radar wave being reflected off an object in the co-working area (Ac);
   (S102) calculating, based on the received reflected wave, a reflected power level of the object in the co-working area (Ac); and
   (S103, S104) performing interference reduction to reduce interference between the robot (2) and the worker (3) in response to a presence of an object having a calculated reflected power level higher than or equal to a predetermined threshold in the co-working area (Ac).

### REFERENCE SIGNS LIST

- 1: control device
- 2: robot
- 3: worker
- 4: workbench (work tool)
- 10: radar sensor
- 10a: radar transmission-reception section
- 10b: radar data processor
- 11: controller
- 11a: determiner
- 11b: data output unit
- 11c: robot controller
- 11d: warning unit

## Claims

1. A control device for a robot working in cooperation with a worker, the device comprising:
a radar transmission-reception section configured to transmit a radar wave to a co-working area in which the worker and the robot work in cooperation with each other and to receive a reflected wave resulting from the radar wave being reflected off an object in the co-working area;
a radar data processor configured to calculate, based on the reflected wave received by the radar transmission-reception section, a reflected power level of the object in the co-working area; and
a controller configured to perform interference reduction to reduce interference between the robot and the worker in response to a presence of an object having a reflected power level calculated by the radar data processor higher than or equal to a predetermined threshold in the co-working area.

2. The control device according to claim 1, wherein
the interference reduction includes stopping an operation of the robot.

3. The control device according to claim 1 or claim 2, wherein
the interference reduction includes alerting the worker.

4. The control device according to any one of claims 1 to 3, wherein
the co-working area includes a work tool usable by the robot and the worker in cooperative work, and
the predetermined threshold is set to a value greater than a reflected power level of the work tool detected with the radar transmission-reception section being installed in a predetermined state.

5. The control device according to claim 4, wherein
the controller performs the interference reduction and prompts the worker to adjust installation of the radar transmission-reception section in response to a presence of an object being the work tool having a reflected power level calculated by the radar data processor higher than or equal to the predetermined threshold in the co-working area.

6. A control method for a robot working in cooperation with a worker, the method comprising:
transmitting a radar wave to a co-working area in which the worker and the robot work in cooperation with each other and receiving a reflected wave resulting from the radar wave being reflected off an object in the co-working area;
calculating, based on the received reflected wave, a reflected power level of the object in the co-working area; and
performing interference reduction to reduce interference between the robot and the worker in response to a presence of an object having a calculated reflected power level higher than or equal to a predetermined threshold in the co-working area.

7. A program for causing a computer to perform operations included in the control method according to claim 6.
